# EUROPÄISCHE PATENTSCHRIFT

(11) **EP 0 406 622 B1**
(45) Veröffentlichungstag und Bekanntmachung des Hinweises auf die Patenterteilung: **01.09.1993**
(21) Anmeldenummer: 90111714.3
(22) Anmeldetag: 21.06.1990
(51) Int. Cl.: C02F 1/48, C02F 5/08

(54) **Vorrichtung zur Beseitigung von Kesselstein bzw. zur Verhütung der Bildung von Kesselstein**
Scale removal and prevention device
Dispositif pour l'élimination et la prévention de la formation du tartre

(30) Priorität: 04.07.1989 DE 3921860
(43) Veröffentlichungstag der Anmeldung: 09.01.1991
(60) Teilanmeldung: 92118136.8
(73) Patentinhaber: Schulze, Elfriede, D-95111 Rehau (DE); Rudolph, Eberhard, D-90518 Altdorf (DE)
(72) Erfinder: Schulze, Elfriede, D-95111 Rehau (DE); Rudolph, Eberhard, D-90518 Altdorf (DE)
(74) Vertreter: Graf, Helmut, Dipl.-Ing.

(56) Entgegenhaltungen:
- EP-A- 0 190 545
- WO-A-84/04294
- WO-A-88/09773
- DE-A- 3 629 288
- US-A- 2 596 743

## Beschreibung

Die Erfindung bezieht sich auf eine Vorrichtung gemäß Oberbegriff Patentanspruch 1 oder 3.

Für die Behandlung von Wasser zum Verhüten der Bildung von Kesselstein oder Kalkablagerungen in wasserführenden Rohrsystemen sind bereits die unterschledlichsten Vorrichtung bzw. Einrichtungen bekannt. Unter anderem sind auch Vorrichtungen bekannt, die eine Behandlung von stark kalk-und eisenhaltigem Wasser mittels magnetischer Felder vorsehen, wobei diese Geräte auf dem durch praktische Experimente bestätigten Effekt beruhen, daß die in einem kalk- und wasserhaltigen Wasser enthaltenen, zu Ablagerungen und damit auch zu Störungen bzw. Verstopfungen in einem wasserführenden System führenden Bestandteile beim Durchtritt des Wassers durch ein Magnetfeld in ihrer Wirkung derart "neutralisiert werden", daß Ablagerungen in dem wasserführenden System (an Rohren, Behältern, elektrischen Warm-Wasser-Erzeugern, Sanitär-Einrichtungen usw.) nicht mehr oder nur noch in einem sehr verminderten, die Funktionsfähigkeit dieses Systems nicht beeinträchtigendem Maße auftreten.

Bekannt ist insbesondere auch eine Vorrichtung (DE-A- 36 29 288), bei der der Innenraum des von zwei Gehäuseteilen gebildeten Gehäuses durch eine mit allseitigem Abstand von den Gehäuseteilen angeordnete Umlenkplatte in zwei Kammern unterteilt ist. Die beiden Kammern, von denen eine mit einer als Einlaß dienenden Anschlußöffnung des Gehäuses und die andere mit einer als Auslaß dienenden Anschlußöffnung des Gehäuses in Verbindung stehen, sind ebenso wie die kreisförmige Umlenkplatte kreissymmetrisch zu einer Symmetrieachse des Gehäuses ausgebildet. Diese Symmetrieachse wird konzentrisch von einer Magnetspule umschlossen, die ein Magnetfeld erzeugt, dessen Kraft-bzw. Feldlinien von dem das Gehäuse durchströmenden Wasser geschnitten werden. Am Umfang der Umlenkplatte sind die beiden Kammern miteinander verbunden.

Bekannt ist weiterhin eine Vorrichtung zur magnetischen Behandlung von Wasser oder ähnlichen Flüssigkeiten, bei der in einem rohrförmigen Gehäuse in Achsrichtung hintereinander und miteinander abwechselnd ringförmige Permanent-Magnete sowie ringförmige Scheiben vorgesehen sind, die im Bereich ihres äußeren Umfangs jeweils radial gegenüber der Achse des Gehäuses versetzte Öffnungen aufweisen, deren radialer Abstand von der Achse des Gehäuses größer ist als der Abstand der Innenfläche der ringförmigen Permanentmagnete, so daß sich im Inneren des Gehäuses ein mäanderartiger Strömungspfad ergibt, der durch die Öffnungen der Scheibe hindurchführt und um die Permanentmagneten herumführt. Bei diesem bekannten Gerät wird das Magnetfeld nicht durch eine elektrische Magnetspule erzeugt. Weiterhin weist das bekannte Gerät eine relativ große Baulänge dadurch auf, daß zwischen zwei benachbarten Scheiben jeweils ein ringartiger Permanentmagnet vorgesehen ist.

Um zu vermeiden, daß der für die Erzeugung des Magnetfeldes notwendige Magnetspalt, der in einem von der Magnetspule umschlossenen Bereich zwischen den beiden Gehäuseteilen gebildet ist, durch die Anlagerung von eisenhaltigen Partikeln überbrückt bzw. für das Magnetfeld kurz geschlossen wird, wurde auch bereits schon vorgeschlagen, die Ansteuerung der Magnetspule mit einem sich in seiner Polarität ändernden Gleichstrom in der Form vorzunehmen, daß der Gleichstrom die Magnetspule in einem ersten Zeitintervall in der einen Richtung und in einem zweiten Zeitintervall in einer anderen, umgekehrten Richtung durchfließt, so daß evtl. sich in den einem Zeitintervall anlagernde eisenhaltige Partikel in dem zweiten Zeitintervall, d.h. nach dem Umschalten der Stromrichtung abgestoßen oder aber im Magnetfeld zumindest so bewegt werden, daß diese Partikel dann mit dem das Gehäuse durchströmenden Wasserstrom mitgeführt werden können.

Aufgabe der Erfindung ist es, eine Vorrichtung aufzuzeigen, die bei verbessertem konstruktivem Aufbau und bei einer zumindest in Achsrichtung sehr kompakten Bauform eine verbesserte Wirksamkeit besitzt.

Zur Lösung dieser Aufgabe ist eine Vorrichtung entsprechend dem kennzeichnenden Teil des Patentanspruches 1 oder 3.

Bei der Erfindung wird eine wesentliche Vergrößerung der effektiven Länge des Strömungspfades für die das Gehäuse durchströmende Flüssigkeit erreicht. Hierfür sind im Inneren des Gehäuses wenigstens zwei Umlenkplatten vorgesehen, von denen wenigstens eine an ihrem Umfang fest und dicht eingespannt bzw. gehalten ist, und zwar bevorzugt an einer von der wenigstens einen Magnetspule umschlossenen Ring- oder Dichtungsanordnung. Wenigstens eine Umlenkplatte ist mit einer Durchlaßöffnung versehen, so daß im Inneren des Gehäuses wenigstens drei Kammern gebildet sind, von denen zwei durch diese Durchlaßöffnung miteinander verbunden sind und von denen die beiden äußeren Kammern auch mit der als Einlaß bzw. Auslaß dienenden Anschlußöffnung in Verbindung stehen.

Die Durchlaßöffnungen sind bevorzugt in den Umlenkplatten in bezug auf die von der wenigstens einen Magnetspule konzentrisch umschlossenen Gehäuseachse radlal versetzt derart angeordnet, daß jede Durchlaßöffnung einer Umlenkplatte gegenüber der Durchlaßöffnung einer benachbarten Umlenkplatte sowie auch gegenüber einer evtl. benachbarten Anschlußöffnung um einen bestimmten Winkel um die Gehäuseachse versetzt ist. Dieser Winkel beträgt vorzugsweise wenigstens 90° und liegt bevorzugt bei etwa 180°. Durch die Verwendung von wenigstens zwei Umlenkplatten ist es möglich, die effektive Länge des Strömungspfades für das Wasser durch das Gehäuse zu vergrößern und damit eine höhere Verweildauer des Wassers im Magnetfeld oder aber bei hohem Wasserbedarf und bei einer damit verbundenen entsprechend hohen Fließgeschwindigkeit des Wassers eine ausreichend lange Verweildauer und damit Behandlungszeit für das Wasser im Gehäuse zu erreichen.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: einen Längsschnitt durch eine Ausführungsform der erfindungsgemäßen Vorrichtung, bei der im Inneren des Gehäuses zwei Umlenkplatten, nämlich eine glatte und eine profilierte Platte aus ferromagnetischem Material angeordnet sind;
- Fig. 2: einen Schnitt durch die profilierte Platte der Vorrichtung nach Fig. 1;
- Fig. 3: in Teildarstellung eine Draufsicht auf die profilierte Platte gemäß Fig. 2;
- Fig. 4 und 5: Längsschnitte durch zusätzliche Gehäuseteile zur Verwendung bei der Vorrichtung nach Fig. 1;
- Fig. 6: in vereinfachter Darstellung und in Seitenansicht eine weitere Ausführungsform der Erfindung;
- Fig. 7: in vereinfachter Darstellung das Blockschaltbild der elektrischen Schaltung zur Ansteuerung der Magnetspule der Vorrichtung nach Fig. 1;
- Fig. 8: einen Längsschnitt durch eine weitere Ausführungsform der erfindungsgemäßen Vorrichtunng;
- Fig. 9: in vereinfachter Darstellung und im Blockdiagramm eine weitere Ausführungsform der Erfindung.
- Fig. 10: in vereinfachter Darstellung einen Schnitt durch eine Meßeinrichtung der Anordnung nach Fig. 9.

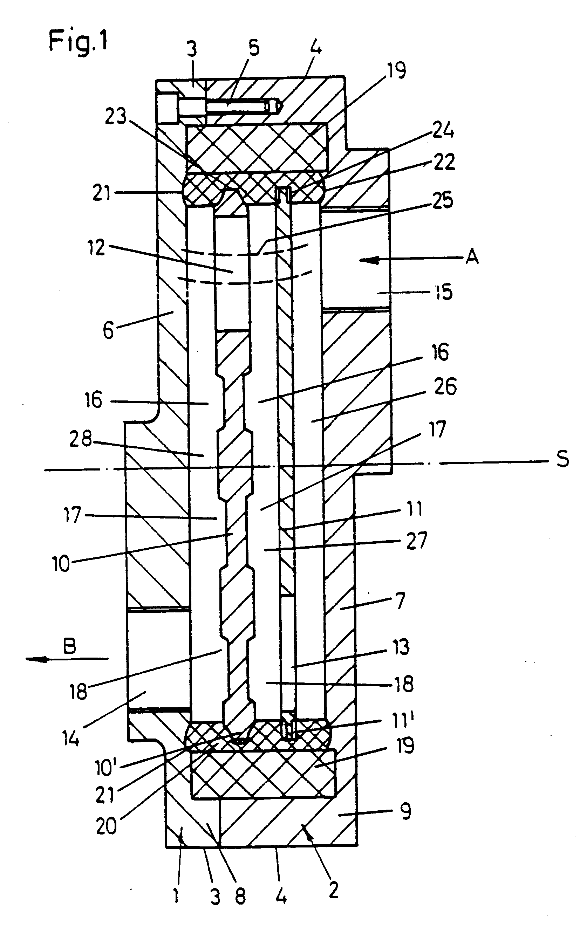

Die in den Figuren dargestellte Vorrichtung, die zur Behandlung von Wasser in einem Magnetfeld und damit zur Beseitigung von Kesselstein bzw. zur Verhütung der Bildung von Kesselstein in einem von Wasser durchströmten Rohrsystem dient, besteht bei der in der Fig. 1 dargestellten Ausführung aus zwei tellerartigen Gehäuseteilen 1 und 2, die jeweils eine kreiszylinderförmige, die Mittel- bzw. Symmetrieachse S der Gehäuseteile 1 und 2 konzentrisch umschließende Umfangsfläche 3 bzw. 4 aufweisen und durch mehrere, am Umfang vorgesehene Schrauben 5 zu dem Gehäuse der Vorrichtung miteinander verbunden sind.

An ihren einander zugewendeten Innenseiten sind die Gehäuseteile 1 und 2 schalen- bzw. tellerartig ausgebildet, d.h. die Gehäuseteile besitzen an dieser Seite an ihrem im wesentlichen kreisscheibenförmigen Gehäuseboden 6 bzw. 7 einen überstehenden ringförmigen Rand, und zwar das Gehäuseteil 1 an dem Gehäuseboden 6 den die Umfangsfläche 3 bildenden Rand 8 und das Gehäuseteil 2 an dem Gehäuseboden 7 den die Umfangsfläche 4 bildenden Rand 9, welch letzterer bei der dargestellten Ausführungsform in Richtung der Symmetrieachse S eine größere Höhe aufweist als der Rand 8, d.h. die von dem Rand 9 umschlossene schalenartige Ausnehmung des Gehäuseteiles 2 ist tiefer als die entsprechende, von dem Rand 8 des Gehäuseteiles 1 umschlossene Ausnehmung.

In dem von den Gehäuseteilen 1 und 2 umschlossenen Gehäuseinnenraum sind bei der dargestellten Ausführungsform zwei Umlenkplatten 10 und 11 angeordnet, die eine kreisförmige, die Symmetrieachse S umschließende Umfangsfläche aufweisen und mit ihrer Platten-Mittelebene jeweils senkrecht zu der Symmetrieachse S liegen. Die Umlenkplatte 10 besitzt gegenüber der Symmetrieachse S radial versetzt eine Durchlaßöffnung 12. Die Umlenkplatte 11 ist mit einer entsprechenden Durchlaßöffnung 13 versehen, die den gleichen Durchmesser wie die Durchlaßöffnung 12 aufweist und um den gleichen Betrag wie die Durchlaßöffnung 12 gegenüber der Symmetrieachse S radial versetzt ist. Die beiden Umlenkplatten 10 und 11 sind so in dem zwischen den Gehäuseteilen 1 und 2 gebildeten Gehäuseinnenraum angeordnet, daß die Durchlaßöffnungen 12 und 13 in bezug auf die Symmetrieachse S um 180° gegeneinander versetzt sind. Den Durchlaßöffnungen 12 und 13 entsprechen Anschlußöffnungen 14 und 15, die bei der dargestellten Ausführungsform den gleichen Querschnitt wie die Durchlaßöffnungen 12 und 13 aufweisen und jeweils mit einem Innengewinde zum Anschluß an eine Rohrleitung versehen sind. Die in einem verstärkten Bereich des Gehäusebodens 7 des Gehäuseteiles 2 vorgesehene Anschlußöffnung 15 dient bei der dargestellten Ausführungsform als Einlaßöffnung zum Zuführen des zu behandelnden Wassers entsprechend dem Pfeil A. Die ebenfalls in einem verstärkten Teil des Gehäusebodens 6 des Gehäuseteiles 1 vorgesehene Anschlußöffnung 14 dient als Auslaßöffnung zum Abführen des behandelten Wassers. Die Anschlußöffnungen 14 und 15 sind so vorgesehen, daß die der Umlenkplatte 10 unmittelbar benachbart liegende Anschlußöffnung 14 in bezug auf die Symmetrieachse S um 180° gegenüber der Durchlaßöffnung 12 und die der Umlenkplatte 11 unmittelbar benachbart liegende Anschlußöffnung 15 in bezug auf die Symmetrieachse S gegenüber der Durchlaßöffnung 13 um eine 180° versetzt ist.

Die dem Gehäuseboden 7 unmittelbar benachbart angeordnete Umlenkplatte 11 ist an ihren beiden Oberflächenseiten als ebene Platte ausgebildet. Die dem Gehäuseboden 6 unmittelbar benachbart liegende Umlenkplatte 10 ist an ihren beiden Oberflächenseiten profiliert, d.h. die Umlenkplatte 10 ist an beiden Oberflächenseiten mit mehreren, zu der jeweiligen Oberflächenseite hin offenen nutenartigen Vertiefungen 16 -18 versehen, die sich jeweils über die gesamte Breite der Umlenkplatte 10 erstrecken, mit ihrer Längserstreckung parallel zueinander sowie jeweils senkrecht zu einer Mittellinie M10 der Umlenkplatte 10 liegen, die (Mittellinie) die Symmetrieachse S sowie die Achse der Durchlaßöffnung 12 schneidet. Im Bereich der nutenartigen Vertiefungen 16 - 18 kommt die an beiden Seiten der Umlenkplatte 10 einander unmittelbar gegenüberliegend vorgesehen sind, d.h. jeder Vertiefung 16, 17 bzw. 18 an der einen Seite der Umlenkplatte 16 ist eine entsprechende Vertiefung 16, 17 bzw. 18 an der anderen Seite der Umlenkplatte 10 unmittelbar benachbart, weist die Umlenkplatte 10 eine Dicke auf, die gleich der Dicke der Umlenkplatte 11 ist. Außerhalb der Vertiefungen 16, 17 ist die Dicke der Umlenkplatte 10 etwa doppelt so groß.

Die beiden Gehäuseteile 1 und 2, die an der den Umlenkplatten 10 bzw. 11 zugewendeten Innenflächen ihrer Gehäuseböden 6 bzw. 7 im wesentlichen eben bzw. plan ausgebildet sind, sowie die Umlenkplatten 10 und 11 sind aus einem ferromagnetischen, bevorzugt aus einem ferritischen Material, d.h. aus Eisenguß (z.B. GG25) hergestellt, wobei dieser Guß nach dem Gießen geglüht und anschließend bearbeitet wird. Dieses ferritische Material hat bei vertretbaren Herstellungskosten sowie bei der Möglichkeit einer Bearbeitung nach dem Gießen und Glühen und bei ausreichender mechanischer Festigkeit optimale magnetische Eigenschaften.

Die Umlenkplatten 10 und 11 sind konzentrisch von einer Magnetspule 19 umschlossen, die ebenfalls zwischen den beiden Gehäuseteilen 1 und 2 angeordnet ist und bei der dargestellten Ausführungsform einen Dichtungsring 20 umschließt, der mit seinen beiden stirnseitigen Ringflächen gegen die Innenflächen der Gehäuseboden 6 und 7 bzw. gegen dort ausgebildete, die Symmetrieachse konzentrisch umschließende, jeweils einen Sitz für den Dichtungsring 20 bildende Anlageflächen 21 bzw. 22 anliegt und damit den vom Wasser durchströmten Raum der Vorrichtung, in dem (Raum) auch die Umlenkplatten 10 und 11 angeordnet sind, von demjenigen Raum trennen, in welchem die Magnetspule 19 untergebracht ist. Der Dichtungsring 20 ist an seiner inneren Ringfläche profiliert, d.h. er weist dort zwei die Symmetrieachse S konzentrisch umschließende und in Richtung dieser Symmetrieachse gegeneinander versetzte Nuten 23 und 24, von denen die Nut 23 die Umlenkplatte 10 an ihrem hinsichtlich der Plattendicke verminderten Umfangsbereich 10′ und die Nut 24 die Umlenkplatte 11 an ihrem in bezug auf die Plattendicke ebenfalls verminderten Umfangsbereich 11' aufnimmt. Der Dichtungsring 20 ist aus einem elastischen gummiartigen Material (z.B. unter Verwendung von synthetischem oder natürlichem Kautschuk) derart hergestellt, daß beim Festziehen der beiden Gehäuseteile 1 und 2 mittels der Schrauben 5 der hierbei elastisch verformte Dichtungsrand 20 nicht nur den vom Wasser durchströmten Innenraum des Gehäuses abschließt, sondern gleichzeitig auch gegen die Innenfläche der ringförmigen Magnetspule 19 und gegen die Bereich 10' sowie 11' der Umlenkplatten 10 und 11 anliegt, so daß sämtliche Teile fest miteinander verbunden sind und auch die Magnetspule 19 rüttelfest eingespannt ist. Das Material des Dichtungsringes 19 weist eine niedrige magnetische Leitfähigkeit auf, so daß sich zwischen jedem Gehäuseteil und der benachbarten Umlenkplatte sowie auch zwischen diesen Umlenkplatten bei von einem Strom durchflossene Magnetspule 19 ein ausreichend großes Magnetfeld ausbilden kann, wie dies in der Fig. 1 mit unterbrochenen Linien 25 angedeutet ist.

Anstelle eines Dichtungsringes 20 können auch mehrere einzelne Dichtungsringe verwendet sein, die dann nicht nur dicht gegen die Gehäuseteile 1 und 2, Umlenkplatten 10 und 11 sowie die Magnetspule 19, sondern dicht gegeneinander anliegen. Durch die Umlenkplatten 10 und 11 ist der Innenraum des von den Gehäuseteilen 1 und 2 gebildeten Gehäuses in drei Kammern 26, 27 und 28 unterteilt, die das Wasser jeweils nacheinander durchströmen muß, um von der Anschlußöffnung 15 an die Anschlußöffnung 14 zu gelangen, d.h. das Wasser tritt an der Anschlußöffnung 15 in die dortige Kammer 26 ein, verläßt diese Kammer dann an der Durchlaßöffnung 13, gelangt nach einer Umlenkung um 180° in die Kammer 27 und verläßt diese Kammer durch die obere Durchlaßöffnung 12 und tritt dann nach einer nochmaligen Umlenkung um 180° in die Kammer 28 ein, bevor das Wasser dann an der an der Kammer 28 vorgesehenen Anschlußöffnung 14 abfließen kann. Beim Durchströmen der Kammer 26 - 28, in denen die Fließrichtung des Wassers im wesentlichen in Ebenen senkrecht zur Symmetrieachse S verläuft, schneidet das Wasser die Magnetfeldlinien 25 des von der Magnetspule 19 erzeugten Magentfeldes senkrecht, womit eine optimale Behandlung des Wassers im Magnetfeld erreicht wird. Durch die Profilierung bzw. nutenförmigen Vertiefungen 16 - 18 der Umlenkplatte 10 wird einmal eine Konzentration der Magnetfeldlinien im Bereich der Ränder dieser Vertiefungen und damit dort eine besonders intensive Behandlung des Wassers im Magnetfeld erreicht. Andererseits sorgt diese Profilierung auch dafür, daß trotz der exzentrischen Anordnung der Durchlaßöffnung 12 sowie der Anschlußöffnung 14 in bezug auf die Symmetrieachse S eine möglichst gleichmäßige Verteilung des Wasserstromes über die gesamte, in Richtung senkrecht zur Mittellinie M, d.h. in Richtung senkrecht zur Zeichenebene der Fig. 1 verlaufende Breite der Kammern 27 und 28 erfolgt.

Da der Erfolg der Behandlung des Wassers mit der vorbeschriebenen Vorrichtung im wesentlichen auch von der Verweildauer des Wassers im Magnetfeld abhängt, ist die Vorrichtung so ausgebildet, daß die effektive Länge, auf der das Wasser zwischen der Anschlußöffnung 15 und der Anschlußöffnung 14 die Vorrichtung durchströmt, durch Verwendung einer entsprechend höheren Anzahl von Umlenkplatten 10 und 11 vergrößert werden kann. So ist es beispielsweise möglich, zusätzlich zu den beiden Umlenkplatten 10 und 11 noch eine weitere Umlenkplatte, beispielsweise eine profilierte Umlenkplatte 10 am Einlaß vorzusehen, so daß dann zwischen den beiden Gehäuseteilen 1 und 2 ausgehend von dem Gehäuseteil 1 eine Umlenkplatte 10, anschließend eine Umlenkplatte 11 und dann wiederum eine Umlenkplatte 10 vorgesehen sind, wobei durch entsprechende Anordnung der Gehäuseteile 1 und 2 sowie der Umlenkplatten 10 und 11 dafür gesorgt ist, daß nicht nur die Durchlaßöffnungen 12 und 13 zweier benachbarter Umlenkplatten in bezug auf die Symmetrieachse S um 180° versetzt sind, sondern auch jede Anschlußöffnung 14 bzw. 15 gegenüber der Durchlaßöffnung 12 der benachbarten Umlenkplatte 10. Zusammen mit der weiteren Umlenkplatte, nämlich beispielsweise der Umlenkplatte 10 wird auch eine etwas breite Magnetspule 19 sowie ein etwas breiterer Dichtungsring 20 verwendet. Um das Gehäuse am Umfang zu schließen, ist zwischen den Gehäuseteilen 1 und 2 dann ein ringartiges Gehäuseteil 29 eingesetzt, welches ebenso wie die ringartigen Ränder 8 und 9 die Magnetspule 19 umschließt und ebenfalls aus ferromagnetischem Material, bevorzugt aus dem vorgenannten ferritischen Material hergestellt ist. Bei einer entsprechend größeren Anzahl von Umlenkplatten 10 bzw. 11 können auch zwei oder mehr als zwei ringförmige Gehäuseteile 29 zwischen den beiden äußeren Gehäuseteilen 1 und 2 vorgesehen sein.

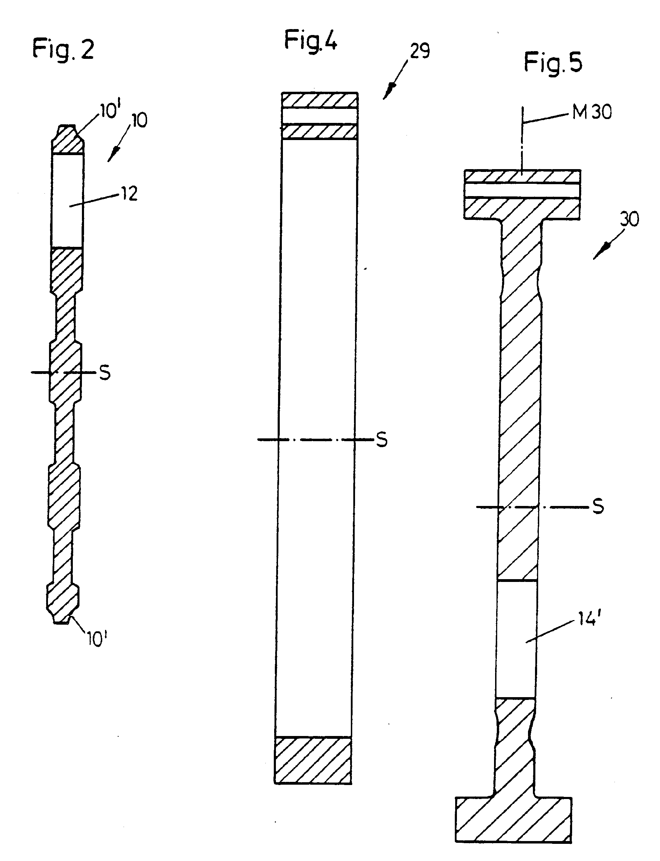

Fig. 5 zeigt ein Gehäuseteil 30, welches anstelle von oder aber zusätzlich zu dem Gehäuseteil 29 bei einer Vergrößerung der Vorrichtung bzw. der effektiven Länge des Wasserweges durch diese Vorrichtung eingesetzt wird. Das Gehäuseteil 30, welches an seiner Umfangsfläche wiederum kreiszylinderförmig ausgebildet ist und dort den gleichen Durchmesser aufweist wie die Gehäuseteile 1, 2 und 29, ist zu seiner, die Symmetrieachse S rechtwinkelig schneidender Mittelebene M 30 spiegelsymmetrisch ausgebildet, wobei jede auf einer Seite dieser Mittellinie M liegende Hälfte hinsichtlich der Formgebung der der Umlenkplatte 10 zugewendeten Seiten des Gehäuseteiles 1 entspricht, wie auch ein Vergleich der Figuren 1 und 5 zeigen. Es ist daher möglich, zur Verlängerung des wirksamen Wasserweges durch die Vorrichtung anstelle des Gehäuseteiles 1 das Gehäuseteil 30 vorzusehen, und dann auf beiden Seiten des Gehäuseteiles 30 jeweils unter Verwendung eines Gehäuseteiles 2, unter Verwendung der Umlenkplatten 10 und 11, unter Verwendung eines Dichtungsringes 20 sowie einer Magnetspule 19 einen die drei Kammern 26, 27 und 28 aufweisender Abschnitt der Vorrichtung auszubilden. Diese Vorrichtung entspricht dann praktisch einer Kaskade bzw. Serienanordnung zweier Vorrichtungen gemäß Fig. 1. Selbstverständlich ist es unter Verwendung der Gehäuseteile 29 und 30 auch möglich, mehrere derartige Vorrichtungsabschnitte aufeinanderfolgend vorzusehen.

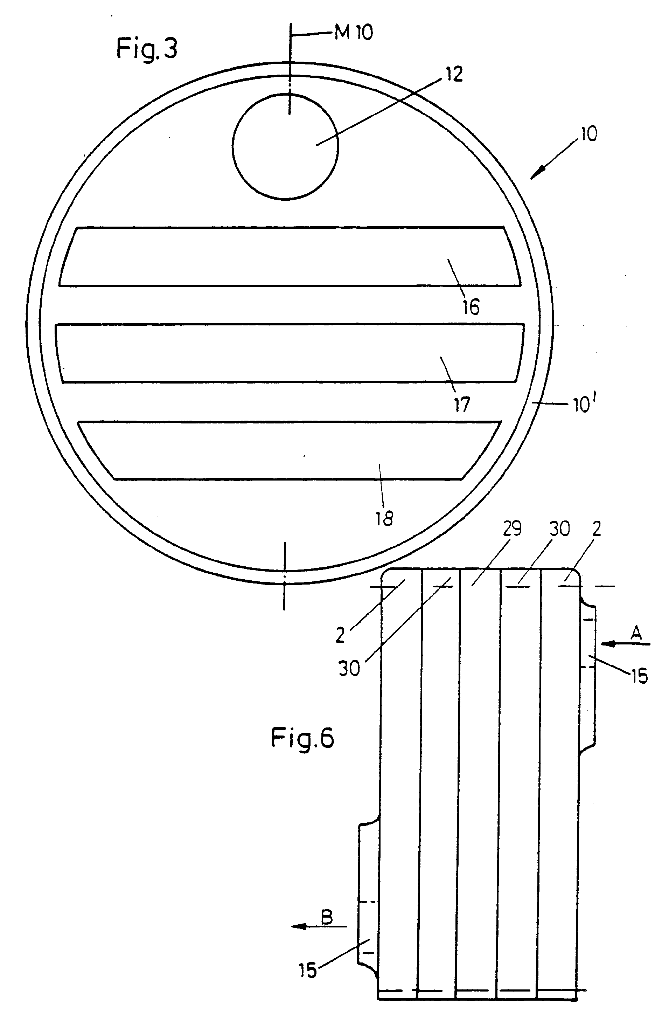

Unter Verwendung zweier Gehäuseteile 2, einer entsprechend großen Anzahl von Gehäuseteilen 29 und 30, von Umlenkplatten 10, 11, Magnetspulen 19 und Dichtungsringen 20 ist es dann auch möglich, eine Vorrichtung kaskadenartig aus mehr als zwei aufeinander folgenden Vorrichtungsabschnitten aufzubauen, wie dies in der Fig. 6 schematisch dargestellt ist. Hierbei sind die beiden Enden der Vorrichtung jeweils von einem Gehäuseteil 2 gebildet. An diese beiden äußeren Gehäuseteile schließen sich jeweils ein Gehäuseteil 30 an, wobei zwischen jedem Gehäuseteil 30 jeweils ein Gehäuseteil 29 vorgesehen ist. Die in der Fig. 6 gezeigte Ausführung weist nur zwei Gehäuseteile 30 mit einem dazwischen liegenden Gehäuseteil 29 auf. Grundsätzlich ist es aber auch möglich, zwischen diesen beiden Gehäuseteilen 30 noch weitere Gehäuseteile 30 mit jeweils einem Gehäusteil 29 anzuordnen, und zwar in der Weise, daß wiederum zwischen zwei aufeinander folgenden Gehäuseteilen 30 ein Gehäuseteil 29 vorgesehen ist. Es versteht sich, daß in jedem zwischen einem Gehäuseteil 2 und einem Gehäuseteil 30 bzw. zwischen zwei aufeinander folgenden Gehäuseteilen 30 (mit dazwischen liegendem Gehäuseteil 29) gebildeten Gehäuseinnenraum die beiden Umlenkplatten 10 und 11 zusammen mit einem Dichtungsring 20 und einer Magnetspule 19 angeordnet sind. Sämtliche Magnetspulen 19 sind dann in Reihe oder parallel betrieben.

Entspricht die Breite des ringartigen Gehäuseteils 29 in Richtung der Symmetrieachse S der Differenz der Höhen, mit der die Ränder 9 und 8 über die Innenfläche des jeweiligen Gehäusebodens 6 bzw. 7 wegstehen, so ist es möglich, anstelle des Gehäuseteils 2 ein Gehäuseteil 1 zusammen mit dem ringartigen Gehäuseteil 29 zu verwenden, wodurch die Anzahl unterschiedlicher Gehäuseteile wesentlich reduziert wird.

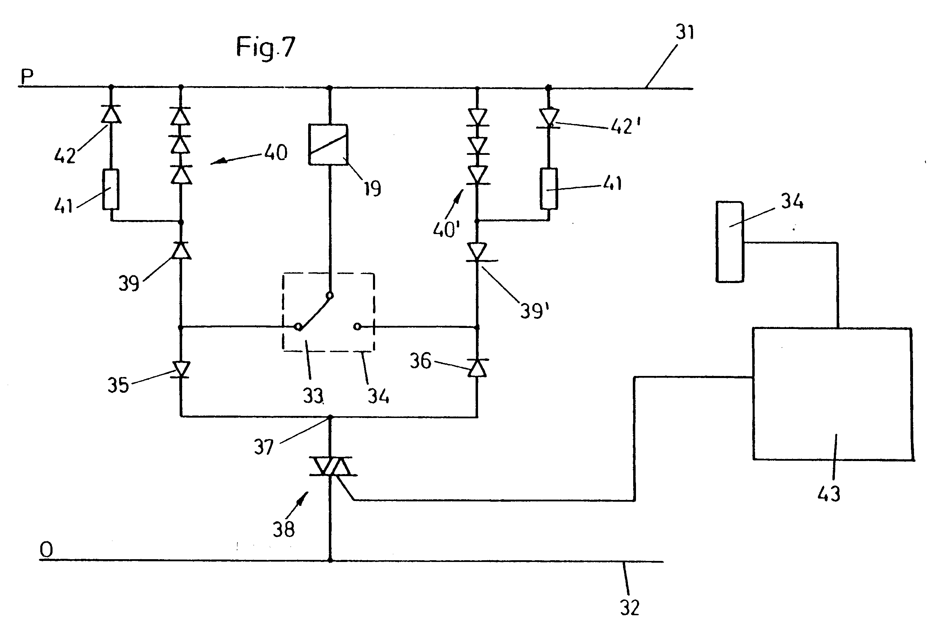

Die Ansteuerung der Magnetspule 19 ist in der Fig. 7 dargestellt. Die gleiche Ansteuerung wird auch verwendet, wenn anstelle nur einer einzigen Magnetspule 19 mehrere, in Serie oder parallel geschaltete Magnetspulen Verwendung finden.

Die Ansteuerung der Magnetspule 19 erfolgt bei der dargestellten Ausführungsform direkt mit einer Wechselspannung von 220 Volt (Netzspannung), die zwischen den Leitungen 31 und 32 anliegt. Dabei sind die Leitung 31 die Phase und die Leitung 32 der Null-Leiter des Wechselspannungs-Versorgungsnetzes. Mit ihrem einen Anschluß ist die Magnetspule 19 an die Leitung 31 angeschlossen. Der andere Anschluß der Magnetspule 19 ist über einen Umschalter 33, der beispielsweise von dem Umschaltkontakt eines Relais 34 gebildet ist, wahlweise über eine Diode 35 oder eine Diode 36 mit einem Schaltungspunkt 37 verbindbar, der über einen von einem Triac gebildeten elektronischen Schalter 38 mit der Leitung 32 verbunden ist. Die Dioden 35 und 36 sind unterschiedlich gepolt, so daß bei geschlossenem Schalter 38 in der in der Fig. 7 dargestellten Stellung des Umschaltelementes 33 entsprechend einer Einweggleichrichtung ein pulsierender Strom mit 100 Hz in der einen Richtung und bei in der anderen Stellung befindlichem Umschalter 33 über die Diode 36 in der anderen Richtung fließt. Zwischen der Diode 35 und der Leitung 33 sind in Serie eine Diode 39 sowie eine von der Serienschaltung dreier Dioden gebildete Diodenanordnung 40 vorgesehen, wobei die Diode 39 und die Diodenanordnung 40 zwar jeweils gleichsinnig, aber entgegen gesetzt zur Diode 35 gepolt sind, d.h. die Anode der Diode 39 ist mit der Anode der Diode 35 verbunden. Parallel zu der Diodenanordnung 40 liegt die Serienschaltung aus einem Widerstand 41 und einer Leuchtdiode 42. In gleicher Weise ist zwischen der Diode 36 und der Leitung 31 eine Diode 39' in Serie mit einer Diodenanordnung 40' und hierzu parallel eine Serienschaltung aus dem Widerstand 41' und der Leuchtdiode 42' vorgesehen, wobei die Dioden 39', 42' sowie die Diodenanordnung 40 identisch mit den Elementen 39, 40 und 42, jedoch umgekehrt gepolt sind, und zwar derart, daß die Kathode der Diode 39' mit der Kathode der Diode 36 verbunden ist. Mit Hilfe einer Steuereinrichtung 43 wird das Relais 34 und damit der Umschalter 33 so gesteuert, daß die Magnetspule 19 über einen längeren Zeitraum T bei in der in der Fig. 7 gezeigten Stellung befindlichem Umschalter 33 betrieben wird und für eine kürzere Zeitdauer t bei erregtem Relais 34 und damit bei in der Arbeitsstellung befindlichem Umschalter 33. Die größere Zeitdauer T beträgt dabei beispielsweise eine Minute und die kleinere Zeitdauer t etwa fünf Sekunden. Durch diese periodische Umpolung der Stromrichtung durch die Magnetspule 19 und damit verbunden durch die periodische Umpolung des Magnetfeldes wird erreicht, daß sich im zu behandelnden Wasser mitgeführte Partikel, die ein ferromagnetisches Material enthalten, sich nicht innerhalb der Vorrichtung an den dortigen Wänden sowie insbesondere im Bereich des Dichtungsringes 20 ablagern und dadurch das Magnetfeld "kurzschließen" können. Derartige Partikel werden vielmehr bei der Umkehr des Stromflusses durch die Magnetspule bzw. des Magnetfeldes abgestoßen und dann mit dem Wasser mitgeführt.

Wesentlich ist bei der in der Fig. 7 dargestellten Ansteuerung, daß auch der Schalter 38 von der Steuereinrichtung 43 betätigt wird, und zwar derart, daß der Schalter 38 vor jedem Umschalten die Verbindung zwischen dem Schaltungspunkt 37 und der Leitung 32 unterbricht und diese Verbindung erst wieder herstellt, wenn der Umschaltvorgang erfolgt ist. Am Ende und am Beginn jeder Periode T sowie t ist somit der Schalter 38 über eine vorgegebene Zeitdauer geöffnet, so daß am Beginn und am Ende jeder Zeitperiode T und t über eine vorgegebene Zeitspanne der Stromfluß durch die Magnetspule 19 vollständig unterbrochen ist. Dies hat den Vorteil, daß nach dem Öffnen des Schalters 38 und noch vor dem Umschalten die in der Magnetspule 19 gespeicherte magnetische Energie über die als Freilaufdioden wirkende Diode 39 und Diodenanordnung 40 abgebaut werden kann, wobei der an der Diodenanordnung 40 auftretende Spannungsabfall, der etwa der Summe der Schwellspannungen der diese Diodenanordnung bildenden Dioden entspricht, ein Aufleuchten der Leuchtdiode 42 bewirkt. Nach dem Abbau der magnetischen Energie der Magnetspule 19 erfolgt weiterhin bei geöffnetem Schalter 38 die Umschaltung mit Hilfe des Umschalters 33. Erst daran anschließend wird der Schalter 38 wieder geöffnet. Erfolgt bei in Arbeitsstellung befindlichem Umschalter 33 das Umschalten, so wird in gleicher Weise zunächst der Schalter 38 geöffnet, so daß die in der Magnetspule 19 enthaltene magnetische Energie über die als Freilaufdioden wirkende Diode 39' und die Diodenanordnung 40' abgebaut werden kann und hierbei die Leuchtdiode 42' aufleuchtet. Erst nach dem Abbau der magnetischen Energie der Magnetspule 19 erfolgt wiederum das Umschalten des Umschalters 33, d.h. durch Abschalten des Relais 34 gelangt dieser Umschalter wieder in seine Ruhestellung, im Anschluß daran wird der Schalter 38 geschlossen.

Durch die Verwendung von mehreren Kammern 26 - 28 wird eine optimale Verweildauer des Wassers in der Vorrichtung erreicht. Die Fließgeschwindigkeit bewegt sich im Bereich zwischen 20 bis 5 Meter pro Sekunde. Bevorzugt beträgt die magnetische Feldstärke maximal bis 10 000 Gauß. Die erste Kammer 26 dient als Beruhigungszone, in der keine Verwirbelungen erfolgen sondern in konstantes Fließen gewährleistet ist. Der Kraftlinieneinfluß ist hier noch gering. Die Kammern 27 und 28 bilden die eigentlichen Behandlungszonen mit Kraftlinienkonzentration an den Kanten der Vertiefungen 16 -18.

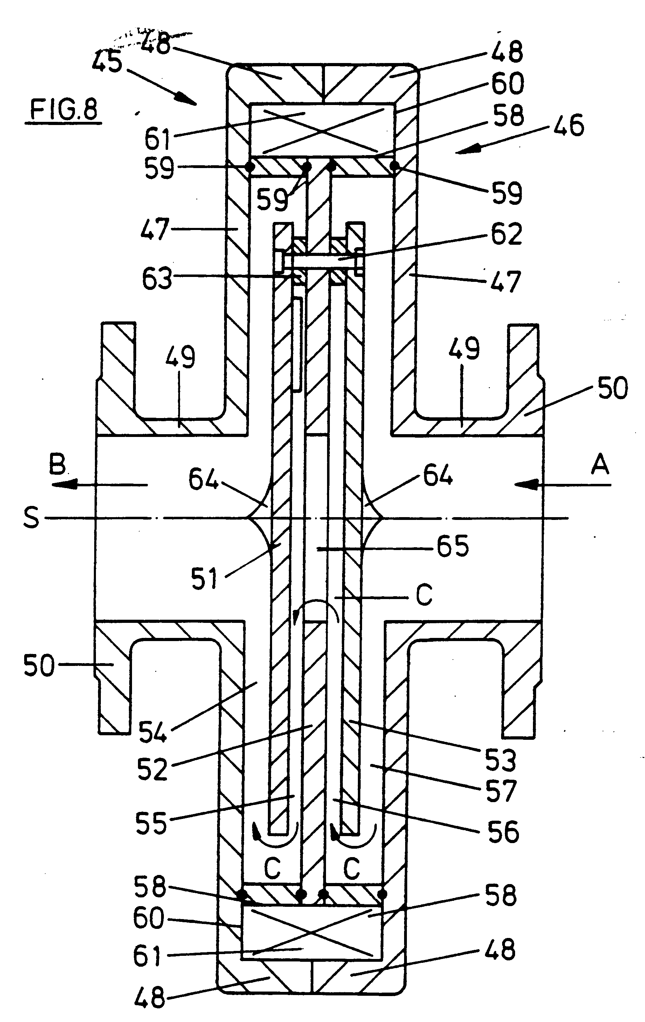

Fig. 8 zeigt als weitere Ausführungsform eine Vorrichtung gemäß der Erfindung, die (Vorrichtung) speziell für große Durchflußmengen bestimmt ist. Diese Vorrichtung besteht aus einem von den Gehäuseteilen 45 und 46 gebildeten Gehäuse. Jedes Gehäuseteil 45 und 46 besteht aus einem kreisscheibenförmigen Gehäuseboden 47 und einem über eine Seite dieses Bodens wegstehenden ringförmigen Rand 48. Weiterhin ist an jedem Boden 47 ein über die andere Seite dieses Bodens wegstehender rohrförmiger Anschluß 49 mit Flansch 50 vorgesehen. Die Anschlüsse 49 schließen bei dieser Ausführungsform die Symmetrieachse S konzentrisch. Jedes Gehäuseteil 45 bzw. 46 ist einstückig mit all seinen Elementen hergestellt. Der Anschluß 49 am Gehäuseteil 46 bildet entsprechend dem dortigen Pfeil A den Einlaß und der Anschluß 49 des Gehäuseteils 45 entsprechend dem Pfeil B den Wasserauslaß. Beide Gehäuseteile liegen mit ihren Rändern 48 gegeneinander an und sind durch nicht näher dargestellte Verbindungselemente, z.B. Schrauben miteinander verbunden. Die Ränder 48 bilden mit ihrer Außenfläche die Umfangsfläche des Gehäuses.

Der Innenraum des Gehäuses ist durch Umlenkplatten 51, 52 und 53, die bei der dargestellten Ausführungsform jeweils kreisscheibenförmig und mit ihrer Umfangsfläche die Symmetrieachse S konzentrisch umschließend ausgebildet sind in vier Kammern 54-57 unterteilt, von denen die beiden äußeren Kammern 54 und 57 mit dem Einlaß bzw. mit dem Auslaß verbunden sind.

Die Umlenkplatten 51 und 53, die jeweils gleichen Durchmesser aufweisen, und zwar einen Durchmesser der kleiner ist als der Durchmesser der mittleren Umlenkplatte 52, sind mit radialem Abstand von jeweils einem Ring 58 aus einem Material mit extrem niedriger magnetischer Leitfähigkeit umgeben, beispielsweise von einem Ring 58 aus hartem, zähem Kunststoff. Jeder Ring 58 umschließt die Symmetrieachse S konzentrisch und ist zwischen der Innenfläche eines Bodens 47 und der mittleren Umlenkplatte 52 eingespannt, und zwar unter Verwendung von Dichtungsringen 59. Durch die Ringe 58 wird somit die mittlere Umlenkplatte durch Einspannen im Bereich ihres Umfangs im Inneren des Gehäuses gehalten. Gleichzeitig wird durch die Ringe 58 von dem vom Wasser durchströmten Innenraum des Gehäuses eine diesen Innenraum bzw. die Umlenkplatten 51 und 53 konzentrisch umschließende ringförmige Kammer 60 getrennt, in der wenigstens eine Magnetspule 61 untergebracht ist. Die Umlenkplatten 51 und 53 sind durch mehrere Verbindungselemente 62 (z.B. Verbindungsbolzen usw.) und Abstandshaltern 63 an der mittleren Umlenkplatte 52 derart gehalten, daß die Umlenkplatten 51-53 ein Paket bilden, in welchem die Umlenkplatten parallel, in Richtung der Symmetrieachse S jedoch voneinander beabstandet angeordnet sind. Während die Gehäuseteile 45 und 46 und die Umlenkplatten 51-53 aus einem Material mit hoher magnetischer Leitfähigkeit, d.h. aus einem ferromagnetischen Material, bevorzugt aus ferritischem Material bestehen, sind die Verbindungselemente 62 sowie auch die Abstandshalter 63 wiederum aus einem Material mit geringer magnetischer Leitfähigkeit hergestellt. Für die Verbindungselemente 62 und Abstandshalter 63 und/oder für die Ringe 58 kann aber auch ein diamagnetisches Material, d.h. ein Material, wie beispielsweise Messing verwendet werden, welches die in einem Magnetfeld vorhandenen Magnetlinien verdrängt.

Die beiden äußeren Umlenkplatten 51 und 53 sind an ihrer dem Wassereinlaß bzw. Wasserauslauf zugewendeten Seite in der Mitte jeweils mit einer Spitze 64 versehen. Die mittlere Umlenkplatte 52 besitzt in der Mitte eine kreisförmige Öffnung 65, deren Durchmesser dem Innenquerschnitt der rohrförmigen Anschlüsse 49 entspricht.

Wie mit den Pfeilen A, B und C angedeutet ist, fließt das zu behandelnde Wasser entsprechend dem Pfeil A der Vorrichtung an dem in der Fig. 7 rechten Anschluß 49 zu, gelangt in die Kammer 47, fließt in dieser Kammer 47 (bezogen auf die Achse S) radial nach außen, umströmt die Umlenkplatte 53 am Umfang, gelangt in die Kammer 56, fließt in der Kammer 56 radial nach innen, gelangt durch die Öffnung 65 in die Kammer 55, fließt in dieser Kammer 55 radial nach außen, umströmt die Umlenkplatte 51 an ihrem Umfang, fließt in der Kammer 54 radial nach innen und tritt schließlich am Auslaß in Richtung des Pfeiles B aus. Durch die Magnetspule 61 wird ein Magnetfeld erzeugt, dessen Magnetlinien zwischen Umlenkplatten 51 - 53 und Böden 47 verlaufen, wobei außerhalb dieses Bereichs der Magnetfluß durch die Gehäuseteile 45 und 46 geschlossen ist. Das zu behandelnde Wasser durchströmt somit durch mehrmaliges Umlenken auf langem Weg das von der Spule 61 erzeugte Magnetfeld.

Die Spule 61 wird vorzugsweise mit der in der Fig. 7 dargestellten Schaltung angesteuert, d.h. die Spule 61 ersetzt dort die Spule 19.

In der Fig. 9 ist mit 66 allgemein eine Vorrichtung zum Behandeln von Wasser bezeichnet, beispielsweise eine Vorrichtung in der Ausbildung der Fig. 1 oder 6. Die Vorrichtung 66 wird entsprechend den Pfeilen A und B von dem Wasser durchströmt und dort von dem der Magnetspule 19 bzw. 61 erzeugten Magnetfeld behandelt. Zur Ansteuerung der Magnetspule dient eine Steuereinrichtung, die beispielsweise ähnlich der Ansteuereinrichtung 67 gemäß Fig. 7 ausgebildet oder zumindest eine gleiche oder ähnliche Funktion aufweist. Das aus der Vorrichtung 66 austretende Wasser durchströmt eine Meßeinrichtung 68, die ein von der Strömung des Wassers abhängiges elektrisches Signal an die Ansteuereinrichtung 67 liefert. Im einfachsten Fall ist die Meßeinrichtung 68 ein sog. Strömungswächter, der immer dann an die Ansteuereinrichtung 67 ein Signal liefert, wenn die Strömungsgeschwindigkeit des Wassers durch die Meßeinrichtung 68 gleich oder annähnern gleich Null ist oder aber einen vorgegebenen Wert unterschreitet. Derartige, insbesondere auch ohne bewegliche Elemente arbeitende Strömungswächter für Flüssigkeiten und insbesondere für Wasser sind an sich bekannt und arbeiten auf dem Prinzip, daß das Abführen der Wärme von einer erwärmten, in die Flüssigkeit bzw. das Wasser hineinreichenden Sonde 69 bei strömender Flüssigkeit größer ist als bei stehender Flüssigkeit. Mit Hilfe einer Vergleichssonde 70 kann dann aus dieser unterschiedlichen Wärmeabfuhr und der daraus resultierenden unterschiedlichen Temperatur der Meßsonde 69 bei strömendem Wasser bzw. bei stehendem Wasser das entsprechende Signal für die Steuereinrichtung 67 erzeugt werden.

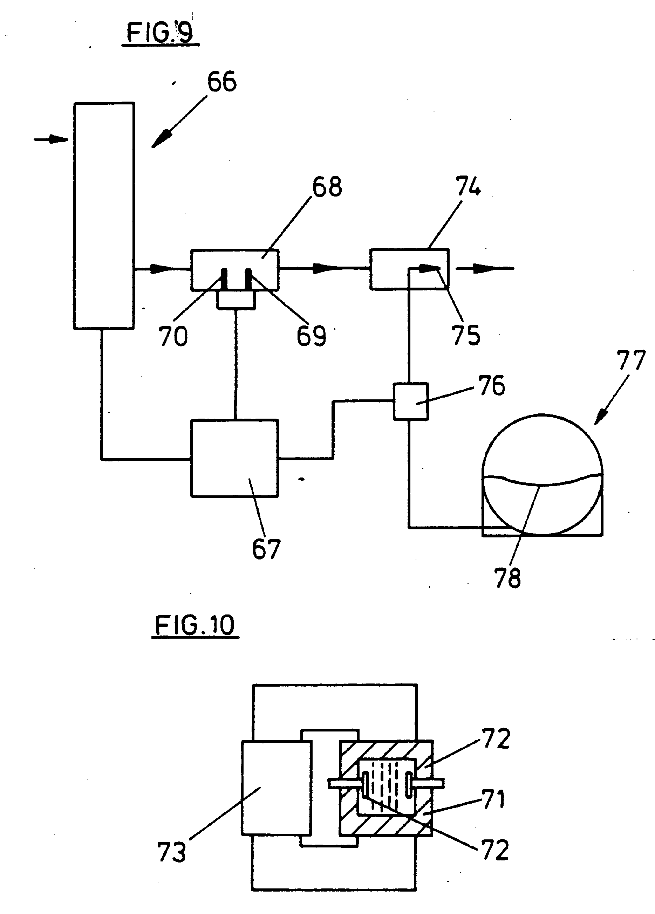

Die Meßeinrichtung 68 kann aber auch so ausgebildet sein, daß mit ihr die Strömungsmenge des Wassers (Meßeinrichtung 68 je Zeiteinheit durchströmende Wassermenge) erfaßt und von ihr ein dieser Strömungsmenge entsprechendes Signal an die Ansteuereinrichtung 67 geliefert wird. In diesem Fall ist die Meßeinrichtung vorzugsweise als auf dem Induktionsprinzip arbeitender Durchflußmesser ausgebildet, d.h. entsprechend Fig. 10 sind in einem von der Meßeinrichtung 68 gebildeten und vom Wasser durchströmten Kanal 71 zwei Elektroden 72 vorgesehen, die sich senkrecht zur Längsrichtung des Kanales einander gegenüberliegen, und zwar in einer ersten Achsrichtung. Mit Hilfe einer Magnetspule 73 ist weiterhin ein Magnetfeld erzeugt, dessen Magnetlinien dem Kanal 71 in einer zweiten, senkrecht zur ersten sowie auch senkrecht zur Längsachse des Kanals verlaufenden Achsrichtung schneiden. Da das den Kanal 71 durchströmende Wasser leitend ist, wirkt dieses Wasser beim Durchströmen des Kanals 71 wie ein in einem Magnetfeld bewegter Leiter. Im fließenden Wasser zwischen den beiden Elektroden 72 und im Eingangskreis einer an diese Elektroden angeschlossener Auswerteinrichtung wird daher ein Strom erzeugt, dessen Größe abhängig ist von der Fließgeschwindigkeit des Wassers und damit von der den Kanal 71 durchströmenden Wassermenge.

Auf die Meßeinrichtung 68 in Strömungsrichtung des Wassers folgend ist eine Injektionseinrichtung 74 vorgesehen, die im wesentlichen von einem vom Wasser durchströmten Kanal mit wenigstens einer im Inneren dieses Kanals angeordneten Injektionsdüse 75 gebildet ist. Die Düse 75 der Injektions-einrichtung ist über eine mit einem Magnetventil 76 versehene Leitung mit einem Behälter 77 verbunden, der ein flüssiges Injektionsmedium, beispielsweise in Wasser oder in einem anderen Lösungsmittel gelösten Mineralien und/oder Spurenelemente usw. unter Druck enthält. Der Innenraum des Behälters 77 besteht aus zwei durch eine bewegliche Membran 78 voneiannder getrennten Kammern, von denen die eine Kammer mit einem gasförmigen Druckmedium (z.B. mit Stickstoff unter Druck) und die andere Kammer mit dem Injektionsmittel gefüllt ist. Durch diese Ausbildung ist es möglich, das Injektionsmittel völlig zu verbrauchen, ohne daß das Druckmedium aus dem Behälter 77 austritt. Der Behälter 77 ist austauschbar derart vorgesehen, daß ein verbrauchter Behälter 77 auch von einem ungeübten Laien von der mit dem Magnetventil 76 versehenen Leitung abgetrennt und ein neuer, gefüllter Behälter 77 an diese Leitung angeschlossen werden kann. Das Magnetventil 76 ist normalerweise geschlossen und wird durch ein Steuersignal der Ansteuereinrichtung 67 geöffnet.

Die Ansteuereinrichtung 67 sorgt zunächst in Verbindung mit der Meßeinrichtung 68 dafür, daß dann, wenn kein Wasser durch die Vorrichtung 66 fließt, die Ansteuerung der in der Vorrichtung 66 vorgesehene Magnetspule unterbrochen wird. Bei der in der Fig. 7 dargestellten Ansteuerschaltung kann dies beispielsweise durch entsprechende Ansteuerung der Steuereinrichtung 43 von der Meßeinrichtung 68 erfolgen, und zwar derart, daß die Steuereinrichtung 43 den Schalter 38 nicht einschaltet, d.h. den diesen Schalter bildenden Triac nicht zündet. Hierdurch wird eine Überhitzung der Magnetspule der Vorrichtung 66 bei fehlendem Wasserfluß, d.h. bei fehlender Kühlung durch das fließende Wasser vermieden. Selbstverständlich kann die Steuerung der Magnetspule durch die Ansteuereinrichtung 67 in Abhängigkeit vom Signal der Meßeinrichtung 68 auch in anderer Weise erfolgen, beispielsweise so, daß ein Abschalter der Ansteuerung der Magnetspule der Vorrichtung 66 dann erfolgt, wenn über eine vorgegebene Zeitperiode kein fließendes Wasser bzw. keine einen vorgegebenen Schwellwert überschreitende Fließgeschwindigkeit oder Flußmenge für das Wasser festgestellt werden.

Die Ansteuereinrichtung 67 steuert weiterhin das Magnetventil 76 und damit die Injektion des Injektionsmittels. Die Injektion des Injektionsmittels erfolgt vorzugsweise getaktet, d.h. es wird jeweils eine gewisse Menge an Injektionsmittel nach einer vorgegebenen Zeitperiode injiziert, wofür dann das Magnetventil 76 nach vorgegebenen Zeitperioden jeweils für eine vorgegebene Zeitdauer geöffnet und anschließend wieder geschlossen wird. Das Injizieren des Injektionsmittels erfolgt dabei auch in Abhängigkeit von dem von der Meßeinrichtung 68 gelieferten Signal, d.h. das Injizieren des Injektionsmittels wird beispielsweise dann unterbrochen, wenn keine Wasserströmung vorliegt oder die Strömungsgeschwindigkeit bzw. Strömungsmenge unter einem vorgegebenen Schwellwert liegt. Ist die Meßeinrichtung ein Durchflußmengenmesser, so erfolgt bevorzugt mit dem von dieser Meßeinrichtung 68 gelieferten Signal eine von dem Wasserdurchfluß abhängige Dosierung mit dem Injektionsmittel, und zwar beispielsweise dadurch, daß die Zeitdauer der Öffnung des Magnetventils in Abhängigkeit von der Durchflußmenge verlängert und/oder die Zeitperioden, während der das Magnetventil 76 geschlossen ist, umgekehrt proportional zur Durchflußmenge verändert werden.

In den Fig. 9 und 10 wurde davon ausgegangen, daß sich die Meßeinrichtung 68 und die Injektionseinrichtung 74 an den Auslaß der Vorrichtung 66 anschließen. Selbstverständlich ist es auch möglich, diese Elemente in Strömungsrichtung des Wassers vor dem Einlaß der Vorrichtung 66 vorzusehen. Weiterhin ist es auch möglich, die Meßeinrichtung 68 sowie die Injektionseinrichtung 74 in die Vorrichtung 66 zu integrieren, wobei es dann speziell auch möglich ist, das von der Magnetspule 19 bzw. 61 erzeugte Magnetfeld für die vorstehend insbesondere im Zusammenhang mit der Fig. 10 beschriebene induktive Durchflußmengenmessung zu verwenden. Hierfür sind dann beispielsweise an den einander gegenüberliegenden Flächen zweier benachbarter Umlenkplatten, beispielsweise der Umlenkplatten 51 und 52 Elektroden 72' elektrisch isoliert vorgesehen, und zwar derart, daß die beiden Elektroden voneinander beabstandet sind.

## Patentansprüche

1. Vorrichtung zur Beseitigung von Kesselstein bzw. zum Verhüten der Bildung von Kesselstein in von einer Flüssigkeit, z.B. Wasser durchströmten Rohrsystemen, wobei die Flüssigkeit dem Magnetfeld wenigstens einer eine Gehäuseachse (S) eines Gehäuses umschließenden Magnetspule (19, 61) ausgesetzt ist, mit einem in dem Gehäuse (1, 2; 45, 46) gebildeten Innenraum, der eine erste, mit einer Einlaßöffnung (15) versehene Kammer (26, 57) und eine zweite, mit einer Auslaßöffnung (14) versehen Kammer (28, 54) bildet, wobei die beiden Kammern (26, 28; 57, 54) jeweils an einer Seite von einer Umlenkplatte (10, 11; 51, 53) begrenzt sind und durch einen im Innenraum des Gehäuses (1, 2; 45, 46) ausgebildeten, mehrfach abgewinkelten Strömungsweg in Verbindung stehen, **dadurch gekennzeichnet,** daß im Innenraum des Gehäuses (1, 2; 45, 46) wenigstens zwei Umlenkplatten (10, 11; 51 - 53) vorgesehen sind, die in Richtung der Gehäuseachse (S) gegeneinander versetzt sind und zwischen sich wenigstens eine dritte Kammer (27; 55, 56) bilden, daß für die Strömungsverbindung zwischen den Kammern (26, 27, 28; 54 - 57) in wenigstens einer Umlenkplatte (10, 11; 52) eine gegenüber der Gehäuseachse (S) radial versetzte Durchlaßöffnung (12, 13; 65) vorgesehen ist, daß diese wenigstens eine Umlenkplatte (10, 11; 51, 53) an wenigstens einer Oberflächenseite eine von Erhebungen und dazwischenliegenden Vertiefungen (16, 18) gebildete Profilierung aufweist, und daß die nutenartig ausgebildeten Vertiefungen (16, 17) mit ihrer Längserstreckung in einer Richtung verlaufen, die sich quer zur einer gedachten Verbindungslinie zwischen der Gehäuseachse (S) und der Durchlaßöffnung (12, 13) der Umlenkplatte (10) erstreckt.

2. Vorrichtung nach Anspruch 1, dadurch gekennzeichnet, daß die Anschlußöffnungen (14, 15) am Gehäuse (1, 2) sowie die Durchlaßöffnungen (12, 13) an den wenigstens zwei Umlenkplatten (10, 11) gegenüber der Gehäuseachse (S) radial versetzt sind, und zwar derart, daß jede Durchlaßöffnung (12, 13) in einer Umlenkplatte (10, 11) gegenüber der Durchlaßöffnung (13, 12) einer benachbarten Umlenkplatte (11, 10) und/oder gegenüber einer benachbarten Anschlußöffnung (14, 15) in bezug auf die Gehäuseachse (S) um einen vorgegebenen Winkelbetrag, vorzugsweise um einen Winkelbetrag von etwa 180° versetzt ist.

3. Vorrichtung zur Beseitigung von Kesselstein bzw. zum Verhüten der Bildung von Kesselstein in von einer Flüssigkeit, z.B. Wasser durchströmten Rohrsystemen, wobei die Flüssigkeit dem Magnetfeld wenigstens einer eine Gehäuseachse (S) eines Gehäuses umschließenden Magnetspule (19, 61) ausgesetzt ist, mit einem in dem Gehäuse (l, 2; 45, 46) gebildeten Innenraum, der eine erste, mit einer Einlaßöffnung (15) versehene Kammer (26, 57) und eine zweite, mit einer Auslaßöffnung (14) versehen Kammer (28, 54) bildet, wobei die beiden Kammern (26, 28; 57, 54) jeweils an einer Seite von einer Umlenkplatte (10, 11; 51, 53) begrenzt sind und durch einen im Innenraum des Gehäuses (1, 2; 45, 46) ausgebildeten, mehrfach abgewinkelten Strömungsweg in Verbindung stehen, **dadurch gekennzeichnet,** daß im Innenraum des Gehäuses (1, 2; 45, 46) wenigstens zwei Umlenkplatten (10, 11; 51 - 53) vorgesehen sind, die in Richtung der Gehäuseachse (S) gegeneinander versetzt sind und zwischen sich wenigstens eine dritte Kammer (27; 55, 56) bilden, daß für die Strömungsverbindung zwischen den Kammern (26, 27, 28; 54 - 57) in den Umlenkplatten (10, 11; 52) gegenüber der Gehäuseachse (S) radial versetzte Durchlaßöffnungen (12, 13; 65) vorgesehen sind, daß die Anschlußöffnungen (14, 15) am Gehäuse (1, 2) sowie die Durchlaßöffnungen (12, 13) an den wenigstens zwei Umlenkplatten (10, 11) gegenüber der Gehäuseachse (S) radial versetzt sind, und zwar derart, daß jede Durchlaßöffnung (12, 13) in einer Umlenkplatte (10, 11) gegenüber der Durchlaßöffnung (13, 12) einer benachbarten Umlenkplatte (11, 10) und/oder gegenüber einer benachbarten Anschlußöffnung (14, 15) in bezug auf die Gehäuseachse (S) um einen vorgegebenen Winkelbetrag, vorzugsweise um einen Winkelbetrag von etwa 180° versetzt ist.

4. Vorrichtung nach Anspruch 3, dadurch gekennzeichnet, daß daß diese wenigstens eine Umlenkplatte (10, 11; 51, 53) an wenigstens einer Oberflächenseite eine von Erhebungen und dazwischenliegenden Vertiefungen (16, 18) gebildete Profilierung aufweist, und daß die nutenartig ausgebildeten Vertiefungen (16, 17) mit ihrer Längserstreckung in einer Richtung verlaufen, die sich quer zur einer gedachten Verbindungslinie zwischen der Gehäuseachse (S) und der Durchlaßöffnung (12, 13) der Umlenkplatte (10) erstreckt.

5. Vorrichtung nach einem der Ansprüche 1 - 4, dadurch gekennzeichnet, daß die wenigstens eine Umlenkplatte an beiden Oberflächenseiten die Profilierung aufweist.

6. Vorrichtung nach einem der Ansprüche 1 - 5, gekennzeichnet durch einen Versorgungsstromkreis für die wenigstens eine Magnetspule (19, 61), der eine von einer Steuereinrichtung (43, 67) angesteuerten Schalteinrichtung (33, 34, 38) zur Ansteuerung der wenigstens einen Magnetspule (19) mit einem sich in seiner Polarität periodisch ändernden Gleitstrom aufweist, welcher die Magnetspule (19) in einem ersten Betriebszustand der Schalteinrichtung (33, 34, 38) in einem ersten, vorzugsweise größeren Zeitintervall (T) in einer ersten Richtung und in einem zweiten Betriebszustand der Schalteinrichtung (33, 34, 38) in einem zweiten, vorzugsweise kleineren Zeitintervall (t) in einer zweiten umgekehrten Richtung durchfließt, wobei die Schalteinrichtung (33, 34, 38) wenigstens einen dritten Betriebszustand aufweist, in welchem der Stromfluß durch die wenigstens eine Magnetspule (19, 61) unterbrochen ist, und wobei die Schalteinrichtung (33, 34, 38) diesen dritten Betriebszustand jeweils zwischen einem ersten und einem zweiten bzw. zwischen einem zweiten und einem ersten Betriebszustand einnimmt.

7. Vorrichtung nach Anspruch 6, dadurch gekennzeichnet, daß zusätzlich zu der wenigstens einen Magnetspule (19, 61) wenigstens ein Dioden (39, 40; 39', 40') und/oder Widerstände aufweisender Dämpfungsstromkreis vorgesehen ist, der in dem dritten Betriebszustand der Schalteinrichtung (33, 34, 38) parallel zu der wenigstens einen Magnetspule (19, 61) zum Abbau der magnetischen Energie der wenigstens einen Magnetspule (19, 61) liegt, wobei bevorzugt parallel zu einem vorzugsweise von einer Diodenanordnung (40, 40') gebildeten Teil des Dämpfungsstromkreises ein eine Leuchtdiode (42, 42') aufweisender Anzeigestromkreis vorgesehen ist.

8. Vorrichtung nach Anspruch 6 oder 7, dadurch gekennzeichnet, daß die Schalteinrichtung von einer von der Steuereinrichtung (43) angesteuerten Umschalteinrichtung (33, 34) gebildet ist, die in einer ersten Position die wenigstens eine Magnetspule (19, 61) mit dem Versorgungsstromkreis für einen Stromfluß in der einen Richtung und in einer zweiten Stellung die wenigstens eine Magnetspule (19, 61) mit dem Versorgungsstromkreis für einen Stromfluß in der anderen, entgegen gesetzten Richtung verbindet, und daß im Versorgungsstromkreis in Serie mit der Umschalteinrichtung (33, 34) ein von der Steuereinrichtung (43) ebenfalls angesteuerter Schalter (38) vorgesehen ist,
wobei vorzugsweise die Umschalteinrichtung (33, 34) sowie der Schalter (38) von der Steuereinrichtung (43) derart angesteuert werden, daß das Umschalten der Umschalteinrichtung (33, 34) jeweils bei geöffnetem Schalter (38) erfolgt,
und/oder wobei vorzugsweise das Umschalten der Umschalteinrichtung (33, 34) jeweils mit einer vorgegebenen zeitlichen Verzögerung auf das Öffnen des Schalters (38) sowie das Einschalten dieses Schalters (38) mit einer vorgegebenen zeitlichen Verzögerung nach jeweils erfolgtem Umschalten der Umschalteinrichtung (33, 34) erfolgt, wobei die jeweilige zeitliche Verzögerung vorzugsweise kleiner ist als die Zeitdauer des ersten und/oder zweiten Zeitintervalls (T, t).

9. Vorrichtung nach einem der Ansprüche 1 - 8, gekennzeichnet durch eine von der wenigstens einen Magnetspule (19, 61) umschlossenen und von wenigstens einem Ring oder Dichtungsring (20, 58) gebildeten Ringanordnung, die den die Kammern (26 - 28; 54 - 57) aufweisenden Innenraum des Gehäuses (1, 2; 45, 46) gegenüber der wenigstens einen Magnetspule (19), 61 abdichtet und an der wenigstens eine der wenigstens zwei Umlenkplatten (10, 11; 51 - 53) an ihrem Umfangsbereich gehalten ist,
wobei vorzugsweise die wenigstens zwei Umlenkplatten (10, 11) an ihrem Umfangsbereich (10', 11') eine verminderte Dicke aufweisen.

10. Vorrichtung nach einem der Ansprüche 1 bis 9, dadurch gekennzeichnet, daß bei einem aus zwei Gehäuseteilen (1, 2) bestehenden Gehäuse wenigstens ein zusätzliches, vorzugsweise ring- oder doppeltellerartiges Gehäuseteil (29, 30) vorgesehen ist, welches zusammen mit wenigstens einer weiteren Umlenkplatte (10, 11) zwischen diesen Gehäuseteilen (1, 2) zur Erhöhung der Anzahl der Kammern (26, 27) angeordnet ist.

11. Vorrichtung nach einem der Ansprüche 1 bis 10, dadurch gekennzeichnet, daß die Gehäuseteile (1, 2) sowie die Umlenkplatten (10, 12) derart ausgebildet sind, daß in jeder Kammer (26, 27, 28) einer profilierten Fläche einer Umlenkplatte (10) jeweils eine nicht profilierte Fläche einer Umlenkplatte (11) bzw. eines Gehäuseteils (1, 2) gegenüber liegt.

12. Vorrichtung nach einem der Ansprüche 1 bis 11, dadurch gekennzeichnet, daß im Inneren des Gehäuses (1, 2) jeweils eine profilierte Umlenkplatte (10) und eine nicht profilierte Umlenkplatte (11) aufeinander folgen.

13. Vorrichtung nach einem der Ansprüche 1 bis 12, dadurch gekennzeichnet, daß das Gehäuse (1, 2; 45, 46), die Umlenkplatten (10, 11; 51 - 53) sowie der wenigstens eine zusätzliche Gehäuseteil (29, 30) aus ferromagnetischem Material, vorzugsweise aus ferritischem Material bzw. Eisen hergestellt sind.

14. Vorrichtung nach einem der Ansprüche 1 bis 13, dadurch gekennzeichnet, daß die wenigstens zwei Umlenkplatten (51, 53) ein Paket von parallel zueinander und im Abstand voneinander angeordneten sowie miteinander verbundenen Platten bilden, und daß eine, mit einer Durchlaßöffnung (65) versehene Umlenkplatte (52) an ihrem Umfang im Gehäuse (45, 46), vorzugsweise an der Ringanordnung (58) befestigt ist, wobei vorzugsweise die Plattenanordnung von wenigstens drei Umlenkplatten (51-53) gebildet ist, und daß die mittlere Umlenkplatte (52) am Gehäuse (45, 46) befestigt ist und die Durchlaßöffnung (65) aufweist.

15. Vorrichtung nach einem der Ansprüche 1 bis 14, gekennzeichnet durch eine Strömungsmeßeinrichtung (68), die ein Signal liefert, welches von der die Vorrichtung durchströmenden Wassermenge und/oder von der Geschwindigkeit des die Vorrichtung durchströmenden Wassers abhängig ist, und daß Mittel (67) vorgesehen sind, die den Stromfluß durch die Magnetspule (19, 61) unterbrechen, wenn die Strömungsgeschwindigkeit oder Strömungsmenge des Wassers Null ist oder einen vorgegebenen Wert unterschreitet, wobei die Meßeinrichtung (68) ein Strömungswächter oder ein Durchflußmengenmesser, bevorzugt ein induktiv arbeitender Durchflußmengenmesser ist.

16. Vorrichtung nach einem der Ansprüche 1 bis 15, gekennzeichnet durch Mittel (74, 75, 76, 77) zum Injizieren eines flüssigen Injektionsmittels in das die Vorrichtung (66) durchströmende Wasser.

17. Vorrichtung nach Anspruch 16, dadurch gekennzeichnet, daß die Mittel zum Injizieren eine Injektionsdüse (75) aufweisen, welche über ein steuerbares Ventil (76) mit einer quelle (77) für das unter Druck stehende Injektionsmittel verbunden ist, und das Ventil von einer Steuereinrichtung (67) vorzugsweise in Abhängigkeit von dem Signal der Meßeinrichtung (68) gesteuert wird.

18. Vorrichtung nach Anspruch 17, dadurch gekennzeichnet, daß die quelle für das unter Druck stehende Injektionsmittel ein Druckbehälter (77) ist, dessen Innenraum durch eine bewegliche oder flexible Wand (78) in eine das Injektionsmittel aufnehmende Kammer und in eine mit einem Druckmedium, vorzugsweise mit einem gasförmigen Druckmedium beaufschlagte Kammer unterteilt ist.

## Claims

1. Device for the removal of scale or the prevention of the formation of scale in a pipe system with a through flowing liquid, eg water, whereby the liquid is subjected to the magnetic field of at least one magnetic coil (19, 61) enclosing the axis (S) of a housing, with an inner space formed in the housing (1, 2; 45, 46) constituting a first chamber (26, 57) provided with an inlet (15), and a second chamber (28, 54) provided with an outlet (14), whereby both chambers (26, 28; 57, 54) are bounded at any time on one side by a baffle (10, 11; 51, 53) and remain in connection through a multiply angled flow path formed in the inner space of the housing (1, 2; 45, 46) characterised in that in the inner space of the housing (1, 2; 45, 46) at least two baffles (10, 11; 51 -53) are provided, being offset with respect to one another in the direction of the housing axis (S) and forming between themselves at least a third chamber (27; 55, 56), and that, for the flow connection between the chambers (26, 27, 28; 54 - 57), a through flow port (12, 13; 65) is provided in at least one baffle (10, 11; 52), radially offset with respect to the housing axis (S), and that the at least one baffle (10, 11; 51, 53) displays on at least a surface side a profile formed of projections and intermediary indentations (16, 18), and that the groove-like formed indentations (16, 17) extend longitudinally in a direction extending transversely to an imaginary connecting line between the housing axis (S) and the through flow port (12, 13) of the baffle.

2. Device according to claim 1, characterised in that the connection openings (14, 15) on the housing (1, 2) as well as the through flow ports (12, 13) on the at least two baffles (10, 11) are radially offset with respect to the housing axis (S), and in such a way that each through flow port (12, 13) in a baffle (10, 11) is offset by a given angle, preferably by an angle of about 180° with respect to the through flow port (13, 12) of an adjacent baffle (11, 10) and/or with respect to an adjacent connection opening (14, 15) with regard to the housing axis (S).

3. Device for the removal of scale or the prevention of the formation of scale in a pipe system with a through flowing liquid, eg water, whereby the liquid is subjected to the magnetic field of at least one magnetic coil (19, 61) enclosing the axis (S) of a housing, with an inner space formed in the housing (1, 2; 45, 46) constituting a first chamber (26, 57) provided with an inlet (15), and a second chamber (28, 54) provided with an outlet (14), whereby both chambers (26, 28; 57, 54) are bounded at any time on one side by a baffle (10, 11; 51, 53) and remain in connection through a multiply angled flow path formed in the inner space of the housing (1, 2; 45, 46) characterised in that in the inner space of the housing (1, 2; 45, 46) at least two baffles (10, 11; 51 - 53) are provided, being offset with respect to one another in the direction of the housing axis (S) and forming between themselves at least a third chamber (27; 55, 56), and that, for the flow connection between the chambers (26, 27, 28; 54 - 57) through flow ports (12, 13; 65) in the baffles (10, 1; 52) are provided, radially offset with respect to the housing axis (S), and that the connection openings (14, 15) on the housing (1, 2) as well as through flow ports (12, 13) on the at least two baffles (10, 11) are radially offset with respect to the housing axis (S), and in such a way that each through flow port (12, 13) in a baffle (10, 11) is offset by a given angle, preferably by an angle of about 180° with respect to the through flow port (13, 12) of an adjacent baffle (11, 10) and/or with respect to an adjacent connection opening (14, 15) with regard to the housing axis (S).

4. Device according to claim 3, characterised in that the at least one baffle (10, 11; 51, 53) displays on at least a surface side a profile formed of projections and intermediary indentations (16, 18) and that the groove like formed indentations (16, 18) extend longitudinally in a direction, extending transversely to an imaginary connecting line between the housing axis (S) and the through flow port (12, 13) of the baffle (10).

5. Device according to one of claims 1 to 4, characterised in that the at least one baffle displays a profile on both side surfaces.

6. Device according to one of claims 1 to 5, characterised by a supply circuit for the at least one magnetic coil (19, 61), having a switch device (33, 34, 38) triggered by a control device (43, 67) to drive the at least one magnetic coil (19) with a current periodically alternating in polarity, which the magnetic coil (19) passes in a first mode of the switch device (33, 34, 38) in a first preferably larger time interval (T) in a first direction and in a second mode of the switch device (33, 34, 38) in a second, preferably smaller time interval (t) in a second, reversed direction, whereby the switch device (33, 34, 38) has at least a third mode, in which the current flow is intermittent through the at least one magnetic coil (19, 16) and whereby the switch device (33, 34, 38) occupies this third mode at any time between a first and a second or between a second and a first mode.

7. Device according to claim 6, characterised in that in addition to the at least one magnetic coil (19, 61), at least a diode (39, 40; 39', 40') and/or resistance displaying damping circuit is provided, being in the third mode of the switch device (33, 34, 38) parallel to the at least one magnetic coil (19, 61) for the discharge of the magnetic energy of said at least one magnetic coil (19, 61) whereby preferably parallel to a part of the damping circuit preferably constructed from a diode arrangement (40, 40') a display circuit having a light emitting diode (42, 42') is provided.

8. Device according to claims 6 or 7, characterised in that the switch device is formed from a switch over device (33, 34) triggered from a control device (43) connected in a first position to the, at least one magnetic coil (19, 61) with the supply circuit providing a current flow in one direction and connected in a second position to the at least one magnetic coil (19, 61) with the supply circuit providing a current flow in the other, oppositely set direction, and that in the supply circuit in series with the switch over device (33, 34), a switch (38), likewise triggered from the control device, is provided, whereby preferably the switch over device (33, 34) as well as the switch (38) are so triggered by the control device (43), that the switch over of the switch over device (33, 34) takes place at any time by opened switch (38) and/or whereby preferably the switch over of the switch over device (33, 34) takes place at any time with a given time delay on the opening of the switch (38) as well as the switching on of the switch (38) with a given time delay another, at any time, switching over of the switch over device (33, 34) occurred, whereby the respective time delay is preferably smaller than the duration of the first, and/or second time interval (T, t).

9. Device according to one of claims 1 to 8 characterised by a ring device constructed from the at least one enclosed magnetic coil (19, 61) and from at least a ring or seal (20, 58), sealing the inner space of the housing (1, 2; 45, 46) displaying the chambers (26 - 28; 54-57) opposite the, at least, a magnetic coil (19, 61) and at least one of the two baffles (10, 11; 51, 53) is terminated on their perimeter area whereby preferably the at least two baffles (10, 11) display a reduced thickness on their perimeter area (10', 11').

10. Device according to one of claims 1 to 9, characterised in that by the two housing parts (1, 2) comprising the housing at least an additional, preferably ring or double-plate like housing part (29, 30) is provided, which is arranged together with at least an additional baffle (10, 11) between these housing parts (1, 2) to increase the number of chambers (26, 27).

11. Device according to one of claims 1 to 10, characterised in that the housing parts (1, 2) as well as the baffle (10, 12) are formed in such a way that in each chamber (26, 27, 28) a profiled surface of a baffle (10) at any time has opposite an unprofiled surface of a baffle (11) or of a housing part (1, 2).

12. Device according to one of claims 1 to 11, characterised in that in the interior of the housing (1, 2) a profiled baffle (10) and an unprofiled baffle (11) are arranged sequentially.

13. Device according to one of claims 1 to 12, characterised in that the housing (1, 2; 45, 46), the baffles, as well as at least an additional housing part (29, 30) are manufactured out of ferromagnetic material, preferably out of ferrous material or iron.

14. Device according to one of claims 1 to 13, characterised in that the at least two baffles (51, 53) form a stack of plates, parallel to one another and arranged at a distance from one another as well as connected to each other, and that a baffle (52) provided with a through flow port (65) is mounted on its perimeter in the housing (45, 46), preferably to the ring arrangement (58) whereby preferably the plate arrangement is formed from at least three baffles (51-53) and that the middle baffle (52) is mounted to the housing (45, 46) and displays the through flow port (65).

15. Device according to one of claims 1 to 14, characterised by a flow meter device (68), which delivers a signal which is dependent on the volume of water flowing through the device and/or on the velocity of the water flowing through the device and that means (67) are provided that interrupt the current flow through the magnetic coil (19, 61) if the flow speed or flow volume of the water is zero or is lower than a given value wherein the measuring device (68) is a flow monitor or a through flow meter, preferably an inductively operating through flow meter.

16. Device according to one of claims 1 to 15 characterised by means (74, 75, 76, 77) for the injection of a liquid medium into the water flowing through the device (66).

17. Device according to claim 16, characterised in that the injection means display an injection nozzle (75), which is connected via a controllable valve (76) with a source (77) for the pressurised injection medium, and the valve is controlled by a control device (67) preferably dependently upon the signal of the measuring device (68).

18. Device according to claim 17, characterised in that the source for the pressurised injection medium is a pressure vessel (77), the inner space of which is divided by means of a movable or flexible wall (78) into a chamber containing the injection medium and a chamber containing a pressure medium, preferably a gaseous pressure medium.

## Revendications

1. Dispositif pour l'élimination et la prévention de la formation du tartre dans des systèmes de tuyaux à travers lesquels passe un liquide, par exemple de l'eau, le liquide étant exposé au champ magnétique d'au moins une bobine excitatrice (19, 61) entourant l'axe (S) d'un carter ou logement, avec un espace intérieur formé dans le carter (1, 2; 45, 46), espace intérieur qui forme une première chambre (26, 57) munie d'une ouverture d'entrée (15), et une deuxième chambre (28, 54) munie d'une ouverture de sortie (14), les deux chambres (26, 28; 57,54) étant limitées chacune à un côté par une plaque de changement de direction ou chicane (10, 11; 51, 53) et étant en communication par un trajet de circulation à plusieurs coudes réalisé dans l'intérieur du carter (1, 2; 45, 46), caractérisé en ce que l'on prévoit dans l'espace intérieur du carter (1, 2; 45, 46) au moins deux plaques de changement de direction (10, 11; 51 - 53) qui sont décalées l'une par rapport à l'autre en direction de l'axe de carter (S) et forment entre elles au moins une troisième chambre (27; 55, 56), en ce qu'on prévoit pour la communication permettant la circulation entre les chambres (26, 27, 28; 54 - 57), dans au moins une plaque de changement de direction (10, 11; 52), une ouverture de passage (12, 13; 65) décalée radialement par rapport à l'axe de carter (S), cette plaque de changement de direction (au moins une) (10, 11; 51, 53) est profilée sur au moins une face par des élévations et des creux (16, 18) disposés intermédiairement et les creux (16, 17) agencés sous forme de rainures sont disposés avec leur étendue longitudinale dans une direction qui s'étend transversalement à une ligne de jonction imaginaire entre l'axe du carter (S) et l'ouverture de passage (12, 13) de la plaque de changement de direction (10).

2. Dispositif selon la revendication 1 caractérisé en ce que les ouvertures de raccordement (14, 15) sur le carter (1, 2) ainsi que les ouvertures de passage (12, 13) aux plaques de changement de direction (au moins deux) (10, 11) sont décalées radialement par rapport à l'axe de carter (S) et cela de manière telle que chaque ouverture de passage (12, 13) dans une plaque de changement de direction (10, 11) est décalée d'un angle donné,de préférence d'un angle d'environ 180°, par rapport à l'ouverture de passage (13, 12) d'une plaque de changement de direction voisine (11, 10) et/ou par rapport à une ouverture de raccordement voisine (14, 15), en se référant à l'axe de carter (S).

3. Dispositif pour l'élimination et la prévention de la formation du tartre dans des systèmes de tuyaux à travers lesquels passe un liquide, par exemple de l'eau, le liquide étant exposé au champ magnétique d'au moins une bobine excitatrice (19, 61) entourant l'axe (S) d'un carter ou logement, avec un espace intérieur formé dans le carter (1, 2; 45, 46), espace intérieur qui forme une première chambre (26, 57) munie d'une ouverture d'entrée (15), et une deuxième chambre (28, 54) munie d'une ouverture de sortie (14), les deux chambres (26, 28; 57, 54) étant limitées chacune à un côté par une plaque de changement de direction ou chicane (10, 11; 51, 53) et étant en communication par un trajet de circulation à plusieurs coudes réalisé dans l'intérieur du carter (1, 2; 45, 46), caractérisé en ce que l'on prévoit dans l'espace intérieur du carter (1, 2; 45, 46) au moins deux plaques de changement de direction (10, 11; 51 - 53) qui sont décalées l'une par rapport à l'autre en direction de l'axe de carter (S) et forment entre elles au moins une troisième chambre (27; 55, 56), en ce qu'on prévoit pour la communication permettant la circulation entre les chambres (26, 27, 28; 54 - 57), dans les plaques de changement de direction (10, 11; 52), des ouvertures de passage (12, 13; 65) décalées radialement par rapport à l'axe de carter (S), les ouvertures de raccordement (14, 15) sur le carter (1, 2) ainsi que les ouvertures de passage (12, 13) aux plaques de changement de direction (10, 11) (au moins deux) sont décalées par rapport à l'axe de carter (S) et cela de manière telle que chaque ouverture de passage (12, 13) dans une plaque de changement de direction (10, 11) est décalée d'un angle donné, de préférence d'un angle d'environ 180°, par référence à l'axe de carter (S), par rapport à l'ouverture de passage (13, 12) d'une plaque de changement de direction voisine (11, 10) et/ou par rapport à une ouverture de raccordement voisine (14, 15).

4. Dispositif selon la revendication 3 caractérisé en ce que cette plaque de changement de direction (au moins une) (10, 11; 51, 53) est profilée sur au moins une face par des élévations et des creux intermédiaires (16, 18) et les creux agencés sous forme de rainures (16, 17) sont disposés avec leur étendue longitudinale dans une direction qui s'étend transversalement à une ligne de jonction imaginaire entre l'axe de carter (S) et l'ouverture de passage (12, 13) de la plaque de changement de direction (10).

5. Dispositif selon l'une des revendications 1 à 4 acractérisé en ce que la plaque de changement de direction (au moins une) est profilée sur ses deux faces.

6. Dispositif selon l'une des revendications 1 à 5 caractérisé par un circuit de courant d'alimentation pour la bobine excitatrice (au moins une) (19, 61) qui comporte un dispositif de couplage (33, 34, 38) commandé par un dispositif de commande (43, 67) pour l'alimentation de la bobine (19) (au moins une) par un courant à polarité constamment modifiée lequel traverse la bobine (19) dans un premier état de fonctionnement du dispositif de couplage (33, 34, 38) dans un premier intervalle de temps (T) de préférence supérieur dans un premier sens et dans un deuxième état de fonctionnement du dispositif de couplage (33, 34, 38) dans un deuxième intervalle de temps (t) de préférence inférieur dans un deuxième sens inverse, le dispositif de couplage (33, 34, 38) comportant au moins un troisième état de fonctionnement dans lequel le courant circulant dans la bobine (19, 61) (au moins une) est interrompu et l'unité de couplage (33, 34, 38) prenant ce troisième état de fonctionnement chaque fois entre un premier et un deuxième état de fonctionnement ou entre un deuxième et un premier état de fonctionnement.

7. Dispositif selon la revendication 6 caractérisé en ce qu'on prévoit en supplément de la bobine (19, 61) (au moins une), au moins un circuit d'amortissement comportant des diodes (39, 40; 39', 40') et/ou des résistances lequel, dans le troisième état de fonctionnement du dispositif de couplage (33, 34, 38), est disposé en parallèle avec la bobine (19, 61) (au moins une) pour la dissipation de l'énergie magnétique de la bobine (19, 61) (au moins une), un circuit indicateur comportant une diode luminescente (42, 42') étant prévu de préférence en parallèle à une partie du circuit d'amortissement formé de préférence par un arrangement à diodes (40, 40').

8. Dispositif selon la revendication 6 ou 7 caractérisé en ce que le dispositif de couplage est formé par un dispositif de commutation (33, 34) commandé par le dispositif de commande (43), dispositif de commutation qui connecte dans une première position la bobine (19, 61) (au moins une) au circuit d'alimentation pour une circulation dans l'un des sens et qui connecte dans une deuxième position la bobine (19, 61) (au moins une) au circuit d'alimentation pour une circulation du courant dans le sens opposé et on prévoit dans le circuit d'alimentation en série avec le dispositif de commutation (33, 34) un commutateur (38) également commandé par le dispositif de coudes commande (43),
le dispositif de commutation (33, 34) ainsi que le commutateur (38) étant commandés par le dispositif de commande (43) de manière telle que la commutation du dispositif (33, 34) a lieu chaque fois lorsque le commutateur (38) est ouvert,
et/ou la commutation du dispositif de commutation (33, 34) ayant de préférence lieu chaque fois avec un retard donné sur l'ouverture du commutateur (38) et la fermeture de ce commutateur (38) ayant lieu avec un retard donné chaque fois après que la commutation du dispositif de commutation (33, 34) ait eu lieu, chacun de ces retards étant de préférence inférieur à la durée du premier et/ou du deuxième intervalle de temps (T, t).

9. Dispositif selon l'une des revendications 1 à 8 caractérisé par un arrangement annulaire entouré par la bobine (19, 61) (au moins une) et formé par au moins un anneau ou un anneau d'étanchéité (20, 58) qui rend étanche l'espace intérieur du carter (1, 2; 45, 46) comportant les chambres (26 - 28; 54 - 57) vis-à-vis de la bobine (19) (au moins une) et auquel est fixée à sa zone périphérique au moins l'une des plaques (au moins deux) de changement de direction (10, 11; 51 - 53), les plaques de changement de direction (au moins deux) (10, 11) présentant de préférence une épaisseur réduite à leur zone périphérique (10', 11').

10. Dispositif selon l'une des revendications 1 à 9 caractérisé en ce que pour un carter constitué de deux parties (1, 2), on prévoit au moins une partie de carter supplémentaire de préférence annulaire sous forme de double plateau (29, 30) qui est disposée avec au moins une autre plaque de changement de direction (10, 11) entre ces parties de carter (1, 2) pour augmenter le nombre de chambres (26, 27).

11. Dispositif selon l'une des revendications 1 à 10 caractérisé en ce que les parties de carter (1, 2) ainsi que les plaques de changement de direction (10, 12) sont agencées de manière telle que dans que dans chacune des chambres (26, 27, 28), une surface non profilée d'une plaque de changement de direction (10) ou d'une partie de carter (1, 2) est placée en face d'une surface profilée.

12. Dispositif selon l'une des revendication 1 à 11 caractérisé en ce qu'à l'intérieur du carter (1, 2) une plaque de changement de direction profilée (10) et une plaque de changement de direction non profilée (11) se suivent chaque fois.

13. Dispositif selon l'une des revendications 1 à 12 caractérisé en ce que le carter (1, 2; 45, 46), les plaques de changement de direction (10, 11; 51 - 53) ainsi que la partie de carter supplémentaire (29, 30) (au moins une) sont fabriqués en matériau ferromagnétique, de préférence en matériau ferritique.

14. Dispositif selon l'une des revendications 1 à 13 caractérisé en ce que les plaques de changement de direction (51, 53) (au moins deux) forment un paquet de plaques disposées parallèlement l'une à l'autre avec une distance l'une de l'autre et assemblées ensemble et une plaque de changement de direction (52) munie d'une ouverture de passage (65) est fixée à sa périphérie dans le carter (45, 46), de préférence dans l'arrangement annulaire (58), l'arrangement de plaques étant de préférence formé par au moins trois plaques de changement de direction (51-53) et la plaque de changement de direction médiane (52) est fixée au carter (45, 46) et comporte l'ouverture de passage (65).

15. Dispositif selon l'une des revendications 1 à 14 caractérisé par un dispositif de mesure de l'écoulement (68) qui fournit un signal qui dépend de la quantité d'eau traversant le dispositif et/ou de la vitesse de l'eau traversant le dispositif et on prévoit des moyens (67) qui interrompent le courant dans la bobine (19, 61) lorsque la vitesse d'écoulement de l'eau ou la quantité d'eau écoulée est nulle ou est inférieure à une valeur donnée, le dispositif de mesure (68) étant un appareil contrôleur de l'écoulement ou un débitmètre, de préférence un débitmètre inductif.

16. Dispositif selon l'une des revendications 1 à 15 caractérisé par des aryens (74, 75, 76, 77) pour l'injection d'un agent d'injection liquide dans l'eau traversant le dispositif (66).

17. Dispositif selon la revendication 16 caractérisé en ce que les moyens pour l'injection comportent une buse d'injection (75) qui est reliée par une soupape (76) pouvant être commandée à une source (77) pour l'agent d'injection se trouvant sous pression et la soupape est commandée par un dispositif de coudes commande (67), de préférence en dépendance du signal du dispositif de mesure (68).

18. Dispositif selon la revendication 17 caractérisé en ce que la source pour l'agent d'injection sous pression est un réservoir sous pression (77) dont l'intérieur est divisé par une paroi mobile ou flexible (78) en une chambre recevant l'agent d'injection et une chambre alimentée par un milieu sous pression, de préférence un milieu sous pression gazeux.
